# EUROPÄISCHE PATENTSCHRIFT

(11) **EP 2 249 559 B1**
(45) Veröffentlichungstag und Bekanntmachung des Hinweises auf die Patenterteilung: **29.07.2015**
(21) Anmeldenummer: 10155565.4
(22) Anmeldetag: 05.03.2010
(51) Int. Cl.: H04N 5/44, G11B 27/00

(54) **Videoempfangsgerät mit Sendersortierung anhand regulärer Ausdrücke**
Video reception device with broadcast station sorting using regular expressions
Appareil de réception vidéo avec triage des chaînes à l'aide d'expressions régulières

(30) Priorität: 09.04.2009 DE 102009003775
(43) Veröffentlichungstag der Anmeldung: 10.11.2010
(73) Patentinhaber: LOEWE Technologies GmbH, 96317 Kronach (DE)
(72) Erfinder: WEICKERT, Bernd, 96224 Burgkunstadt (DE); SCHLEE, Dieter, 96264 Altenkunstadt (DE)

(56) Entgegenhaltungen:
- US-A- 5 859 662
- US-B1- 6 442 757

## Beschreibung

Die vorliegende Erfindung betrifft ein Videoempfangsgerät, das derart ausgebildet ist, dass es in einem Sendersuchlauf eine Anzahl von Fernsehsendern empfängt, bei jedem empfangenen Fernsehsender, dem ein Sendername zugeordnet ist, den Sendernamen mit Sortierkriterien vergleicht, wobei jedes Sortierkriterium einem von mehreren Programmplätzen und/oder einer Gruppe von Programmen zugeordnet ist, und den empfangenen Fernsehsender in Abhängigkeit des Vergleichsergebnisses dem jeweiligen Programmplatz zuordnet und/oder der jeweiligen Gruppe von Programmen hinzufügt.

Die vorliegende Erfindung betrifft weiterhin Betriebssoftware, die Maschinencode umfasst, mit dem ein Videoempfangsgerät programmierbar ist, so dass der Maschinencode von dem Videoempfangsgerät unmittelbar abarbeitbar ist, wobei das Videoempfangsgerät auf Grund der Programmierung mit dem Maschinencode zu einem Videoempfangsgerät der obenstehend beschriebenen Art ausgebildet wird.

Die oben genannten Gegenstände sind allgemein bekannt. Das Videoempfangsgerät kann insbesondere als Fernseher, als Sat-Receiver, als DVBT-Receiver usw. ausgebildet sein.

Im Stand der Technik ist jedem Programmplatz ein jeweiliges Sortierkriterium zugeordnet. Das Videoempfangsgerät prüft in einem Sendersuchlauf, ob bei einem empfangenen Fernsehsender dessen Sendername mit einem der Sortierkriterien übereinstimmt, und ordnet gegebenenfalls den empfangenen Fernsehsender dem jeweiligen Programmplatz zu. Stellt das Videoempfangsgerät für keinen der Programmplätze eine Übereinstimmung des Sendernamens mit dem jeweiligen Sortierkriterium fest, sortiert es den empfangenen Fernsehsender in der Regel am Ende einer Liste der empfangenen Fernsehsender ein. In einem Normalbetrieb verwendet das Videoempfangsgerät die Sendernamen der Fernsehsender. Insbesondere werden die Sendernamen verwendet, um den Anwender eine entsprechende Information zu liefern.

Bei Digitalfernsehen ist weiterhin eine sogenannte Bouquet-Bildung bekannt. Bei einer Bouquet-Bildung übertragen die Fernsehsender zusätzlich zum Fernsehsignal als solchem nicht nur den Sendernamen, sondern auch eine Information darüber, zu welchem Bouquet sie jeweils gehören.

In der Praxis ist die Vorgehensweise des Standes der Technik nicht immer komfortabel. Beispielsweise sind die Bouquets oftmals themenbezogen (beispielsweise Sport - Nachrichten - Unterhaltung). Bei den Programmplätzen führen auch geringfügige Abweichungen des vom Fernsehsender verwendeten Sendernamens vom Sortierkriterium dazu, dass der entsprechende Fernsehsender nicht korrekt erkannt wird. Weiterhin sind Programme trotz identischen Fernsehsignals als solchem (= Programminhalte) oftmals über viele Fernsehsender empfangbar. Insbesondere bei Sat-Receivern bläht sich dadurch die Gesamtliste der empfangenen Fernsehsender stark auf.

Aus der US 2003/0137605 A1 ist ein Videoempfangsgerät bekannt, welches in einem Sendersuchlauf eine Anzahl von Fernsehsendern empfängt, wobei den Fernsehsendern Sendernamen zugeordnet sind und dort als Sortierkriterium eine Auswertung ähnlicher Sendernamen basierend auf einem oder mehreren vorgegebenen Buchstaben des Sendernamens erfolgt.

Weiterhin ist aus der US 6,442,757 B1 ein Verfahren zum Sortieren von Programmplätzen zugeordneten Empfängskanälen nach einem Sendersuchlauf bekannt, wobei als Sortierkriterium der alphanummerische Sendername bzw. dessen Abkürzung ausgewertet wird.

In der EP 0 391 656 A2 ist ein Verfahren zur Sendersuche in Abhängigkeit von der Eingabe des Sendernamens beschrieben.

Aus der WO 2008/063022 A1 ist ein Verfahren zum Sortieren von Empfangskanälen bekannt, wobei die Kurzbezeichnungen der empfangenen Fernsehsender berücksichtigt werden.

Weiterhin ist aus der DE 195 25 336 B4 ein Verfahren zur Auswahl empfangener Fernsehsender (Programme) bekannt, wobei diese entsprechend ihrer alphanummerischen Bezeichnung in Gruppen eingruppiert werden.

Ferner ist aus der DE 198 15 952 A1 ein Verfahren zur Belegung des Senderspeichers eines Videoempfangsgerätes nach einem Sendersuchlauf bekannt, wobei eine Sendersuchlauftabelle bezüglich namensgleicher Sender überprüft wird.

Darüber hinaus ist aus der US 5,859,662 ein Verfahren zum Suchen von Programmbeiträgen bekannt, wobei aus einem Fernsehsignal verborgene Untertiteldaten herausgefiltert werden und die gefilterten Untertiteldaten, welche einen Text enthalten, mit Suchbegriffen verglichen werden. Dazu wird ein Fernsehsender und eine Uhrzeit ausgewählt, für welchen und in welchem Zeitraum die Suche erfolgen soll.

Ausgehend von diesem Stand der Technik liegt der Erfindung die Aufgabe zugrunde, dem Anwender des Videoempfangsgerätes eine verbesserte, komfortable Bedienung zu ermöglichen.

Die Aufgabe wird durch ein Videoempfangsgerät mit den Merkmalen des Anspruchs 1 gelöst. Vorteilhafte Ausgestaltungen des erfindungsgemäßen Videoempfangsgerätes sind Gegenstand der abhängigen Ansprüche 2 bis 7.

Erfindungsgemäß ist bei einem Videoempfangsgerät der eingangs erläuterten Art vorgesehen, dass mindestens eines der Sortierkriterien als Mehrfachkriterium ausgebildet ist, das aus einer Anzahl additiv miteinander verknüpfter Teilbedingungen besteht, von denen mindestens eine als regulärer Ausdruck ausgebildet ist, wobei der reguläre Ausdruck aus einer Teilbedingung und mindestens einem Platzhalter besteht, der stellvertretend für eine beliebige Anzahl von Zeichen vor und/oder hinter der Teilbedingung steht, so dass sie von mehreren Sendernamen erfüllbar ist, wobei in dem Fall, dass mindestens einem der Programmplätze eines der Mehrfachkriterien zugeordnet ist,
- dem dem betreffenden Programmplatz zugeordneten Fernsehsender ein Maß für den Grad zugeordnet ist, zu dem der zugehörige Sendername die von ihm erfüllte Teilbedingung des dem jeweiligen Programmplatz zugeordneten Mehrfachkriteriums übererfüllt, und
- das Videoempfangsgerät derart ausgebildet ist, dass es
   -- vor dem Zuordnen des empfangenen Fernsehsenders zu dem betreffenden Programmplatz ein Maß für den Grad ermittelt, zu dem der Sendername des empfangenen Fernsehsenders die von ihm erfüllte Teilbedingung des dem betreffenden Programmplatz zugeordneten Mehrfachkriteriums übererfüllt, und
   -- den empfangenen Fernsehsender nur dann dem betreffenden Programmplatz zuordnet, wenn das für den Sendernamen des empfangenen Fernsehsenders ermittelte Maß für einen geringeren Grad an Übererfüllung charakteristisch ist als das Maß, das dem dem betreffenden Programmplatz momentan zugeordneten Fernsehsender zugeordnet ist.

Dadurch ist es möglich, im Wesentlichen alle relevanten und möglicherweise relevanten Fernsehsender aufzufinden und dem "richtigen" Programmplatz und/oder "richtigen" Gruppe von Programmen zuzuordnen.

Durch diese Vorgehensweise wird insbesondere auch der Fall mit abgedeckt, dass eine der Teilbedingungen des entsprechenden Mehrfachkriteriums exakt erfüllt ist.

In einer bevorzugten Ausgestaltung ist das Videoempfangsgerät derart ausgebildet, dass es in der Lage ist, im Nachgang zum Sendersuchlauf
- selbsttätig oder in Reaktion auf einen Gruppenauswahlbefehl die Sendernamen der Fernsehsender einer Gruppe als Block an einen Anwender auszugeben,
- vom Anwender einen Senderauswahlbefehl für einen der Fernsehsender der Gruppe entgegen zu nehmen und
- den vom Anwender ausgewählten Fernsehsender einem der Gruppe zugeordneten bevorzugten Programmplatz zuzuordnen.

Ebenso ist es möglich, dass das Videoempfangsgerät derart ausgebildet ist, dass es in der Lage ist, nach der Selektion eines der Fernsehsender durch einen Anwender
- vom Anwender einen für alle Gruppen einheitlichen Gruppenanwahlbefehl entgegen zu nehmen,
- sofern möglich, in Reaktion auf den Gruppenanwahlbefehl mindestens eine Gruppe zu ermitteln, der der momentan selektierte Fernsehsender zugeordnet ist,
- die Sendernamen der Fernsehsender der ermittelten Gruppe als Block an den Anwender auszugeben und
- vom Anwender einen Senderauswahlbefehl für einen der Fernsehsender der Gruppe entgegen zu nehmen.

Im Falle der letztgenannten Ausgestaltung ist bevorzugt, dass das Videoempfangsgerät derart ausgebildet ist, dass es in der Lage ist,
- in Reaktion auf den Gruppenanwahlbefehl alle Gruppen zu ermitteln, der der momentan selektierte Fernsehsender zugeordnet ist, und die Gruppen als solche an den Anwender auszugeben und
- vor dem Entgegennehmen des Senderauswahlbefehls für einen der Fernsehsender der Gruppe zunächst einen Gruppenauswahlbefehl für eine der Gruppen entgegen zu nehmen und in Reaktion auf den Gruppenauswahlbefehl die Sendernamen der Fernsehsender der ausgewählten Gruppe als Block an den Anwender auszugeben.

Das Videoempfangsgerät ist vorzugsweise weiterhin derart ausgebildet, dass es in der Lage ist, nach der Selektion eines der Fernsehsender durch einen Anwender,
- für mindestens eine der Gruppen vom Anwender einen Gruppenauswahlbefehl für die jeweilige Gruppe entgegen zu nehmen,
- in Reaktion auf den Gruppenauswahlbefehl die Sendernamen der Fernsehsender der ausgewählten Gruppe als Block an den Anwender auszugeben und
- vom Anwender einen Senderauswahlbefehl für einen der Fernsehsender der Gruppe entgegen zu nehmen.

Im Falle der letztgenannten Ausgestaltung sollte das Videoempfangsgerät vorzugsweise in der Lage sein, nach der Selektion eines der Fernsehsender durch den Anwender
- einen Gruppenausgabebefehl entgegen zu nehmen,
- in Reaktion auf den Gruppenausgabebefehl die Gruppen als solche an den Anwender auszugeben und
- sodann den Gruppenauswahlbefehl für eine der Gruppen entgegen zu nehmen.

Derzeit ist bevorzugt, dass das Videoempfangsgerät derart ausgebildet ist, dass es im Rahmen der Ausgabe der Gruppen als solche pro Gruppe jeweils den Sendernamen eines vorbestimmten Fernsehsenders der jeweiligen Gruppe oder eine von den Sendernamen der jeweiligen Gruppe zu erfüllende Minimalbedingung an den Anwender ausgibt.

Die Aufgabe wird weiterhin durch eine Betriebssoftware der obenstehend erläuterten Art gelöst, wobei das Videoempfangsgerät auf Grund der Programmierung mit dem Maschinencode zu einem erfindungsgemäßen Videoempfangsgerät ausgebildet wird. Die Betriebssoftware kann insbesondere auf einem Datenträger in maschinenlesbarer Form gespeichert sein.

Weitere Vorteile und Einzelheiten ergeben sich aus der nachfolgenden Beschreibung eines Ausführungsbeispiels in Verbindung mit den Zeichnungen. Es zeigen in Prinzipdarstellung
- Figur 1: ein Blockschaltbild einer Videoanordnung,
- Figuren 2 und 3: Ablaufdiagramme,
- Figur 4: eine Auflistung verschiedener Fernsehsender,
- Figur 5: ein Ablaufdiagramm,
- Figur 6: mögliche Sortierkriterien,
- Figur 7: ein Ablaufdiagramm,
- Figur 8: weitere mögliche Suchkriterien,
- Figur 9: ein Ablaufdiagramm,
- Figur 10: eine mögliche Bildschirmanzeige,
- Figur 11: ein Ablaufdiagramm,
- Figur 12: eine mögliche Anzeige von Programmplätzen und deren Belegung und
- Figuren 13 und 14: Ablaufdiagramme.

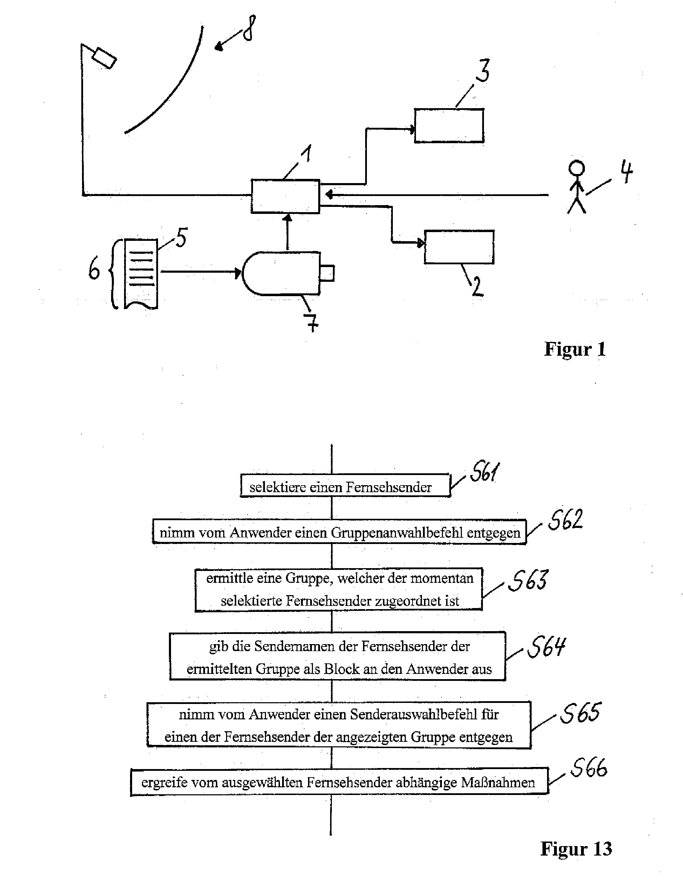

Gemäß Figur 1 weist eine Videoempfangsanordnung unter anderem ein Videoempfangsgerät 1 und eine Anzeigeeinrichtung 2 auf. Das Videoempfangsgerät 1 dient dem Zweck, ein Fernsehsignal zu empfangen und über eine entsprechende Ausgabeeinrichtung 3 an einen Anwender 4 auszugeben. Insbesondere weist die Ausgabeeinrichtung 3 zu diesem Zweck ein Sichtgerät auf, über welches der Videoanteil des Fernsehsignals an einen Anwender 4 ausgegeben wird.

Es ist möglich, dass die Anzeigeeinrichtung 2 und die Ausgabeeinrichtung 3 miteinander identisch sind. Beispielsweise kann ein sogenanntes OSD (= on screen display) erfolgen. Dies ist jedoch nicht zwingend erforderlich. Es ist ebenso möglich, dass die Anzeigeeinrichtung 2 und die Ausgabeeinrichtung 3 voneinander verschiedene Einrichtungen sind. Weiterhin ist es möglich, dass die Anzeigeeinrichtung 2 und/oder die Ausgabeeinrichtung 3 Bestandteile des Videoempfangsgeräts 1 sind. Beispielsweise kann das Videoempfangsgerät 1 als konventioneller Fernseher ausgebildet sein. Alternativ ist es möglich, dass zumindest die Ausgabeeinrichtung 3 nicht Bestandteil des Videoempfangsgeräts 1 ist. Beispiele derartiger Videoempfangsgeräte 1 sind Sat-Receiver und DVBT-Receiver. Dargestellt ist in Figur 1 eine Ausgestaltung des Videoempfangsgeräts 1 als Sat-Receiver. Dies ergibt sich aus der gezeigten Satellitenantenne 8. Diese Ausgestaltung ist jedoch rein beispielhaft. Sie darf nicht beschränkend verstanden werden.

Die Wirkungsweise des Videoempfangsgeräts 1 wird in der Regel durch einen Mikroprozessor bestimmt. Die Wirkungsweise des Mikroprozessors wird in der Regel durch Betriebssoftware 5 bestimmt. Die Betriebssoftware 5 weist Maschinencode 6 auf, mit dem das Videoempfangsgerät 1 programmiert ist. Der Maschinencode 6 wird in der Regel vom Hersteller des Videoempfangsgeräts 1 im Videoempfangsgerät 1 hinterlegt. Die Betriebssoftware 5 kann dem Videoempfangsgerät 1 beispielsweise über einen Datenträger 7 zugeführt werden, auf dem die Betriebssoftware 5 in maschinenlesbarer Form gespeichert ist. Alternativ ist es möglich, die Betriebssoftware 5 dem Videoempfangsgerät 1 über eine Rechner-Rechner-Verbindung zuzuführen, beispielsweise ein LAN oder das WWW. Wenn die Betriebssoftware 5 auf einem Datenträger 7 gespeichert ist, kann der Datenträger 7 alternativ als fest installierter Datenträger oder als mobiler Datenträger ausgebildet sein. Dargestellt ist in Figur 1 eine mobile Ausgestaltung in Form eines USB-Memorysticks. Diese Ausgestaltung ist jedoch rein exemplarisch. Alternativ ist es möglich, den Datenträger 7 beispielsweise als Festplatte, als gesockeltes oder eingelötetes Flash-EPROM, als SD-Speicherkarte, als Smartcard usw. auszugestalten.

Der Maschinencode 5 ist vom Videoempfangsgerät 1 (genauer: vom zentralen Mikroprozessor des Videoempfangsgeräts 1) unmittelbar abarbeitbar. Auf Grund der Programmierung mit dem Maschinencode 6 ist das Videoempfangsgerät 1 so ausgebildet, dass es die nachfolgend näher erläuterten Funktionalitäten aufweist.

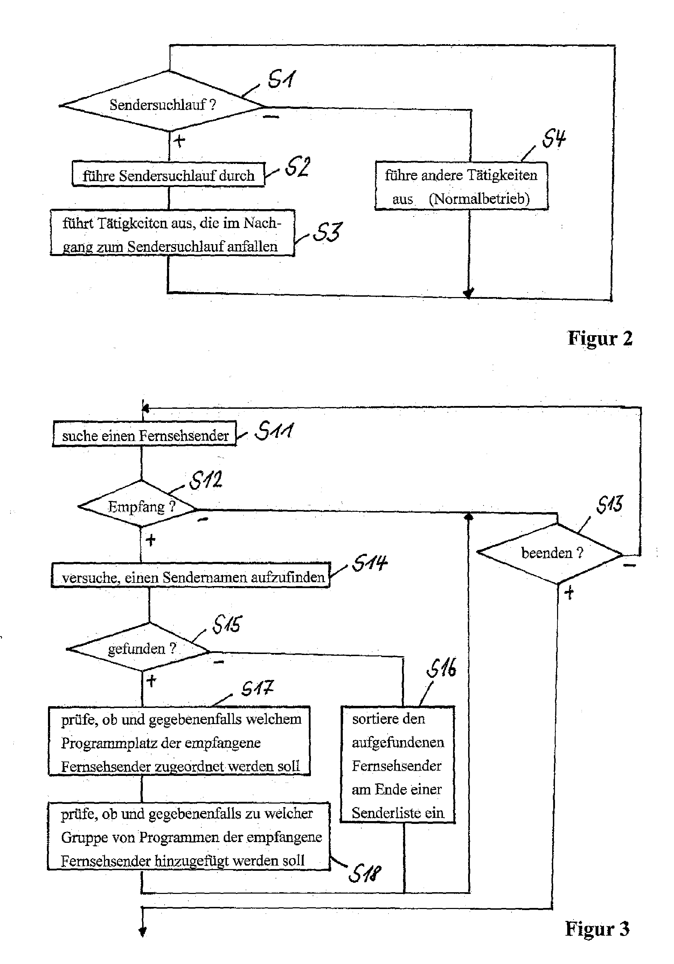

Gemäß Figur 2 führt das Videoempfangsgerät 1 zyklisch Schritte S1 bis S4 aus. Im Schritt S1 prüft das Videoempfangsgerät 1, ob es einen Sendersuchlauf durchführen soll. Falls es den Sendersuchlauf durchführen soll, führt es den Sendersuchlauf im Schritt S2 durch. Im Schritt S3 führt das Videoempfangsgerät 1 Tätigkeiten aus, die im Nachgang zum Sendersuchlauf anfallen. Im Schritt S4 führt das Videoempfangsgerät 1 andere Tätigkeiten aus. Der Schritt S4 umfasst insbesondere den Normalbetrieb, in welchem der Anwender 4 dem Videoempfangsgerät 1 einen Sendernamen oder einen Programmplatz vorgibt, so dass das Videoempfangsgerät 1 auf den entsprechenden Fernsehsender abgestimmt wird.

Nachstehend wird anhand von Figur 3 zunächst der Sendersuchlauf (= der Schritt S2 von Figur 2) näher erläutert.

In einem Schritt S11 sucht das Videoempfangsgerät 1 einen Fernsehsender. In einem Schritt S12 prüft das Videoempfangsgerät 1, ob es einen Fernsehsender empfängt. Wenn dies nicht der Fall ist, geht das Videoempfangsgerät 1 zu einem Schritt S13 über, in dem es prüft, ob der Sendersuchlauf beendet ist. Wenn dies nicht der Fall ist, geht das Videoempfangsgerät 1 zum Schritt S11 zurück.

Falls das Videoempfangsgerät 1 einen Fernsehsender empfängt, geht es vom Schritt S12 aus zu einem Schritt S14 über. Im Schritt S14 versucht das Videoempfangsgerät 1, einen dem empfangenen Fernsehsender zugeordneten Sendernamen aufzufinden. In einem Schritt S15 prüft das Videoempfangsgerät 1, ob es den Sendernamen auffinden konnte.

Wenn das Videoempfangsgerät 1 keinen Sendernamen auffinden konnte, sortiert das Videoempfangsgerät 1 den aufgefundenen Fernsehsender in einem Schritt S16 am Ende einer Senderliste ein. Anderenfalls führt das Videoempfangsgerät 1 Schritte S17 und S18 aus. Die Reihenfolge der Schritte S17 und S18 ist hierbei vertauschbar.

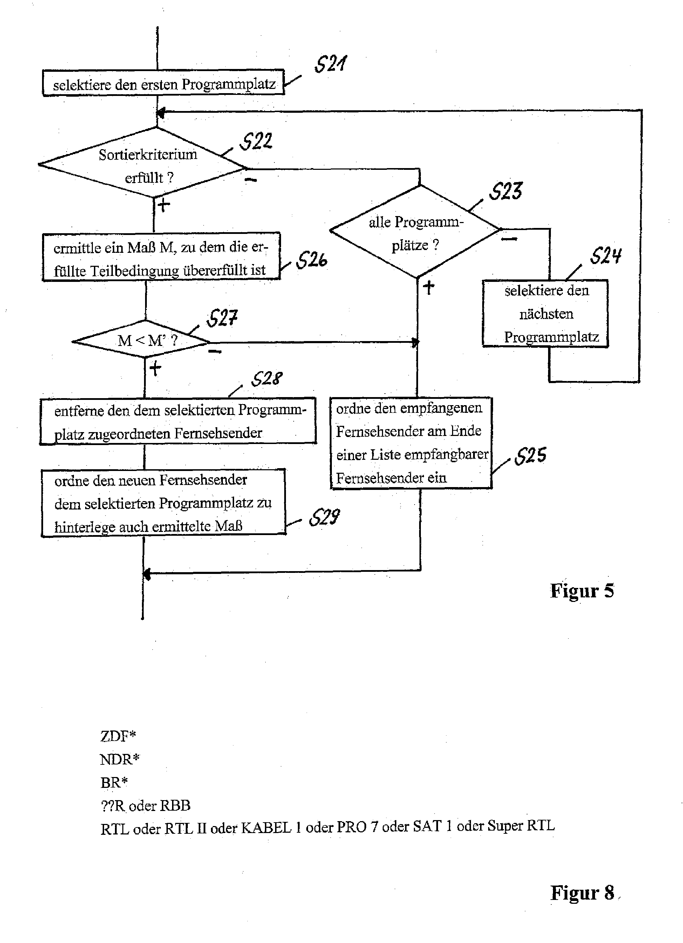

Im Schritt S17 prüft das Videoempfangsgerät, ob und gegebenenfalls welchem Programmplatz der empfangene Fernsehsender zugeordnet werden soll. Je nach Ergebnis der Prüfung ordnet das Videoempfangsgerät 1 den empfangenen Fernsehsender einem bestimmten Programmplatz zu oder ordnet ihn am Ende der Senderliste ein. Der Schritt S17 wird später in Verbindung mit Figur 5 näher erläutert werden.

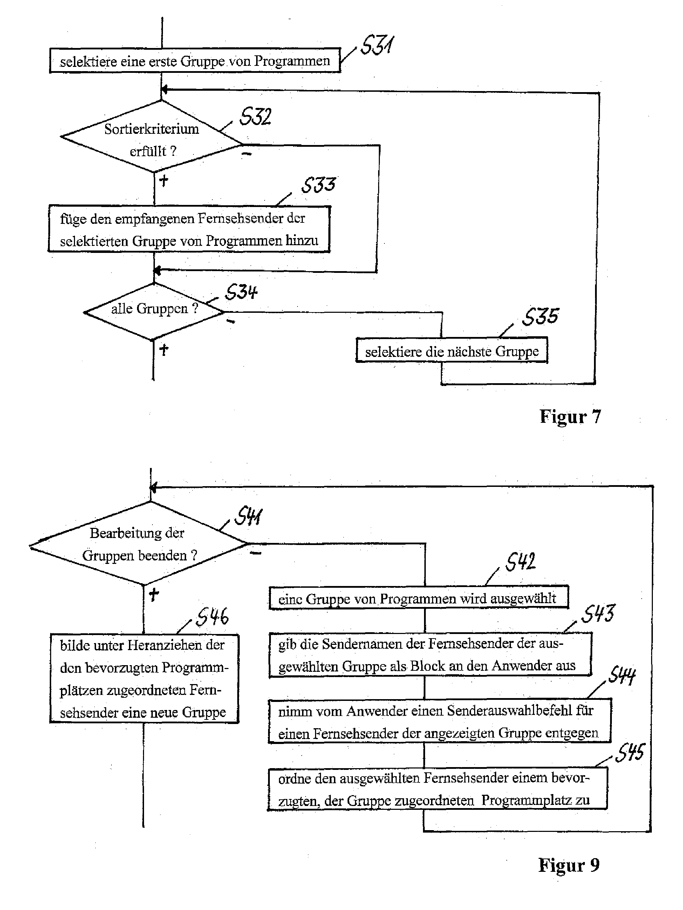

Im Schritt S18 prüft das Videoempfangsgerät 1, ob und gegebenenfalls zu welcher Gruppe von Programmen der empfangene Fernsehsender hinzugefügt werden soll. Falls eine derartige Gruppe von Programmen aufgefunden wird, wird der empfangene Fernsehsender der entsprechenden Gruppe hinzugefügt. Anderenfalls werden keine weiteren Maßnahmen ergriffen. Der Schritt S18 wird später in Verbindung mit Figur 7 näher erläutert werden.

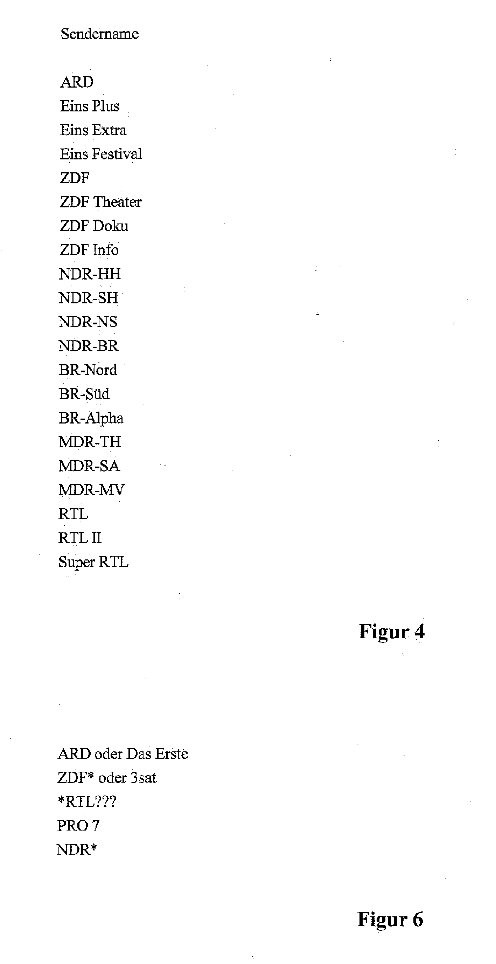

Der Begriff "Sendername" bezeichnet eine alphanumerische Zeichenkette, die dem jeweiligen Fernsehsender (= dem Kanal, auf dem das Fernsehsignal übertragen wird) beigefügt wird. Der Sendername dient unter anderem der automatischen Identifikation des empfangenen Fernsehsenders durch das Videoempfangsgerät 1. Der Sendername wird weiterhin an den Anwender 4 ausgegeben, damit auch der Anwender 4 weiß, um welchen Fernsehsender es sich jeweils handelt. Figur 4 zeigt - rein beispielhaft und auszugsweise - die Sendernamen von Fernsehsendern, die beispielsweise über den Satelliten Astra empfangen werden können. In Figur 4 sind - in dieser Reihenfolge - folgende Sender aufgelistet:
- ARD
- Eins Plus
- Eins Extra
- Eins Festival
- ZDF
- ZDF Theater
- ZDF Doku
- ZDF Info
- NDR-HH
- NDR-SH
- NDR-NS
- NDR-BR
- BR-Nord
- BR-Süd
- BR-Alpha
- MDR-TH
- MDR-SA
- MDR-MV
- RTL
- RTL II
- Super RTL

Die in Figur 4 angegebenen Sendernamen bzw. die korrespondierenden Fernsehsender werden in der Praxis nicht in der in Figur 4 angegebenen Reihenfolge beim Sendersuchlauf gefunden. Weiterhin werden viele weitere Fernsehsender gefunden. Diese beiden Umstände sind im Rahmen der vorliegenden Erfindung jedoch irrelevant.

Theoretisch ist weiterhin denkbar, dass einzelne Fernsehsender empfangen werden, denen kein Sendername zugeordnet ist. Aus diesem Grund ist in Figur 3 der Schritt S15 erforderlich.

Figur 5 zeigt eine vereinfachte Ausgestaltung des Schrittes S17 von Figur 3.

Gemäß Figur 5 selektiert das Videoempfangsgerät 1 in einem Schritt S21 den ersten Programmplatz. In einem Schritt S22 prüft das Videoempfangsgerät 1, ob der empfangene Fernsehsender ein dem selektierten Programmplatz zugeordnetes Sortierkriterium erfüllt. Wenn das Sortierkriterium nicht erfüllt ist, geht das Videoempfangsgerät 1 zu einem Schritt S23 über. Im Schritt S23 prüft das Videoempfangsgerät 1, ob es bereits alle Programmplätze abgehandelt hat. Wenn dies nicht der Fall ist, geht das Videoempfangsgerät 1 zu einem Schritt S24 über, in dem es den nächsten Programmplatz selektiert. Sodann geht das Videoempfangsgerät 1 zum Schritt S22 zurück. Anderenfalls ist der Schritt S17 für den jeweiligen empfangenen Fernsehsender abgearbeitet. Es wird lediglich noch in einem Schritt S25 der empfangene Fernsehsender am Ende einer Liste empfangbarer Fernsehsender eingeordnet.

Das Sortierkriterium kann verschiedenartig ausgestaltet sein. Manche Ausgestaltungen sind konventionell oder anderweitig nicht Gegenstand der vorliegenden Erfindung. Andere Ausgestaltungen sind erfindungsgemäß. Nachstehend werden in Verbindung mit Figur 6 einige mögliche Sortierkriterien näher erläutert.

In Figur 6 sind untereinander fünf verschiedene Sortierkriterien dargestellt, und zwar pro Zeile je ein Sortierkriterium. Das erste und das zweite Sortierkriterium bestehen aus jeweils zwei additiv (= logisch oder) verknüpften Teilbedingungen. Das dritte, vierte und fünfte Sortierkriterium besteht aus je einer Teilbedingung. Soweit es das dritte, vierte und fünfte Sortierkriterium betrifft, müsste also nicht zwischen Sortierkriterium und Teilbedingungen unterschieden werden.

Prinzipiell sind auch komplexere Sortierkriterien möglich. Ein Sortierkriterium kann also mehr als zwei Teilbedingungen umfassen, beispielsweise drei, fünf oder acht Teilbedingungen.

Das vierte Sortierkriterium von Figur 6 ist ein Einfachkriterium. Denn die Teilbedingung "PRO 7" kann nur von einem einzigen Sendernamen erfüllt werden, nämlich von dem Sendernamen "PRO 7" (und keinem anderen). Ein Sendername, der über "PRO 7" hinaus weitergehende Bestandteile umfasst, erfüllt dieses Kriterium nicht. Diese Vorgehensweise entspricht der Vorgehensweise des Standes der Technik.

Auch das erste Sortierkriterium ist ein Einfachkriterium. Denn sowohl die Teilbedingung "ARD" als auch die Teilbedingung "Das Erste" können nur von Fernsehsendern erfüllt werden, denen der jeweilige Sendername identisch zugeordnet ist. Auch das erste Sortierkriterium ist nicht ein erfindungsgemäßes Sortierkriterium.

Das zweite, das dritte und das fünfte Sortierkriterium hingegen sind Mehrfachkriterien im Sinne der vorliegenden Erfindung. Der Begriff "Mehrfachkriterium" wird verwendet, weil jedes dieser Sortierkriterien mindestens eine Teilbedingung enthält, die als regulärer Ausdruck ausgebildet ist. Der Begriff "regulärer Ausdruck" ist Fachleuten auf dem Gebiet der Informatik bekannt. Er bezeichnet Kriterien, die Platzhalter ("Joker", "Wild Card") umfassen.

So wird beispielsweise beim zweiten Sortierkriterium dessen erste Teilbedingung von jedem Sendernamen erfüllt, der mit "ZDF" beginnt. Der Stern hinter dem "ZDF" steht stellvertretend für eine beliebige Anzahl von Zeichen, einschließlich keines Zeichens oder eines einzigen Zeichens. Entsprechend der Auflistung von Figur 4 würde die erste Teilbedingung des zweiten Sortierkriteriums von Figur 6 beispielsweise durch die Sendernamen "ZDF", "ZDF Theater", "ZDF Doku" und "ZDF Info" erfüllt werden.

In analoger Weise wird das dritte Sortierkriterium (bzw. dessen einzige Teilbedingung) von vier der in Figur 4 aufgelisteten Sendernamen erfüllt, nämlich von "RTL", von "RTL II" und von "Super RTL". Das Fragezeichen dient als Platzhalter für kein Zeichen oder ein einziges Zeichen, nicht aber zwei oder mehr Zeichen. Ein Sendername "RTL Info" würde also beispielsweise dieses Sortierkriterium nicht erfüllen.

Mit "NDR" wird in Deutschland der Norddeutsche Rundfunk abgekürzt. Der Norddeutsche Rundfunk wird - geographisch gesehen - von verschiedenen Regionalprogrammen bedient, beispielsweise den Regionalprogrammen für Hamburg (HH = Hansestadt Hamburg), Bremen (BR), Schleswig Holstein (SH) und Niedersachsen (NS). Das fünfte Sortierkriterium von Figur 6 würde also von den vier entsprechenden in Figur 4 aufgelisteten Sendernamen erfüllt werden.

Nachstehend wird in Verbindung mit Figur 5 nur der Fall erläutert, dass das Sortierkriterium als Mehrfachkriterium (Definition siehe oben) ausgebildet ist. Denn nur diese Ausgestaltung betrifft den Gegenstand der vorliegenden Erfindung.

Im Falle eines Mehrfachkriteriums prüft das Videoempfangsgerät 1 in einem Schritt S26, welche Teilbedingung erfüllt ist und ob diese Teilbedingung exakt erfüllt ist. Der Begriff "exakt erfüllt" wird hierbei verwendet, wenn die entsprechende Teilbedingung auch dann erfüllt wäre, wenn die Platzhalter nicht vorhanden wären. Beispielsweise bei dem dritten Sortierkriterium von Figur 6 wird die dortige Teilbedingung durch den Sendernamen "RTL" exakt erfüllt. Die Sendernamen "RTL II" und "Super RTL " hingegen übererfüllen die Teilbedingung, weil sie über "RTL" hinaus weitere Elemente enthalten.

Im Schritt S26 ermittelt das Videoempfangsgerät 1 weiterhin ein Maß M, zu dem die erfüllte Teilbedingung übererfüllt ist. Wenn die erfüllte Teilbedingung exakt erfüllt ist, nimmt das Maß M den Wert Null an. Anderenfalls nimmt es einen Wert größer Null an. Beispielsweise kann das Maß M für jedes Zeichen, das dem eigentlichen Suchbegriff nachgeordnet ist, um den Wert x erhöht werden, für jedes Zeichen, das dem eigentlichen Suchbegriff vorgeordnet ist, um den Wert y. Die Werte x und y können untereinander gleich oder voneinander verschieden sein.

Die Ermittlung des Maßes wird nachfolgend anhand des dritten Sortierkriteriums von Figur 6 näher erläutert.
- Das Maß M für den Sendernamen "RTL" ist Null, weil der charakteristische Suchbegriff "RTL" erfüllt ist, aber keine weitergehenden Zusätze vorhanden sind.
- Das Maß M für den Sendernamen "RTL II" ist 3x, weil "RTL" am Anfang steht (also 0y) aber drei zusätzliche Zeichen vorhanden sind, nämlich die Leerstelle und zweimal der Buchstabe "I".
- Das Maß M für den Sendernamen "Super RTL" ist 6y, weil dem "RTL" sechs zusätzliche Zeichen vorgeordnet sind.

In einem Schritt S27 vergleicht das Videoempfangsgerät 1 das im Schritt S26 ermittelte Maß M mit einem korrespondierenden Maß M' des Fernsehsenders, der dem selektierten Programmplatz bereits zugeordnet ist. In dem Fall, dass das jeweilige Sortierkriterium zwei (oder mehr) Teilbedingungen aufweist, die beide als reguläre Ausdrücke ausgebildet sind, können die beiden Maße M, M' alternativ auf die gleiche oder auf voneinander verschiedene Teilbedingungen bezogen sein.

Wenn das im Schritt S26 ermittelte Maß M kleiner als das dem bereits zugeordneten Fernsehsender zugeordnete Maß M' ist, wird zu Schritten S28 und S29 übergegangen. Anderenfalls wird der Schritt S25 ausgeführt.

Im Schritt S28 entfernt das Videoempfangsgerät 1 den Fernsehsender, der dem selektierten Programmplatz momentan zugeordnet ist, von dem selektierten Programmplatz. Der Schritt S28 kann damit verbunden sein, den entfernten Fernsehsender am Ende einer Liste empfangbarer Fernsehsender einzuordnen. Zwingend ist dies jedoch nicht erforderlich. Im Schritt S29 ordnet das Videoempfangsgerät 1 den Fernsehsender, dessen Maß M sie im Schritt S26 ermittelt hat, dem selektierten Programmplatz zu. Im Rahmen der Zuordnung wird vorzugsweise auch das im Schritt S26 ermittelte Maß M mit hinterlegt, da in diesem Fall im Rahmen des Schrittes S27 das entsprechende Maß M' nicht neu ermittelt werden muss.

Der obenstehend in Verbindung mit Figur 5 erläuterte Ablauf stellt eine vereinfachte Ausgestaltung dar. Die Vereinfachung besteht beispielsweise darin, dass der Fall nicht behandelt ist, dass dem selektierten Programmplatz (noch) kein Fernsehsender zugeordnet ist, Denn dieser Fall ist im Rahmen der vorliegenden Erfindung nicht von Bedeutung. Beispielsweise kann erkannt werden, dass dem jeweiligen Programmplatz kein Fernsehsender zugeordnet ist.

Eine weitere Vereinfachung besteht darin, dass beispielsweise verschiedenen Programmplätzen miteinander konkurrierende Sortierkriterien zugeordnet sein können. Beispielsweise können drei verschiedenen Programmplätzen die Sortierkriterien "RTL*", "RTL II" und "Super RTL" zugeordnet sein. In diesem Fall wäre beispielsweise möglich, die Schritte S23 bis S25 den Schritten S26 bis S29 nachzuordnen. Der Schritt S25 wird in diesem Fall erst dann ausgeführt, wenn alle Programmplätze selektiert wurden und der empfangene Fernsehsender keinem Programmplatz zugeordnet werden konnte. Ferner müsste in diesem Fall der Schritt S28 dahingehend modifiziert werden, dass geprüft wird, ob der "verdrängte" Fernsehsender noch einem anderen Programmplatz zugeordnet ist. Nur im Falle, dass der verdrängte Fernsehsender keinem einzigen anderen Programmplatz zugeordnet ist, müsste das Einordnen am Ende der Liste empfangbarer Fernsehsender erfolgen.

Die obenstehend erläuterten Abwandlungen sind selbstverständlich möglich. Sie ändern jedoch nichts am Prinzip der vorliegenden Erfindung, das auch aus der Darstellung gemäß Figur 5 deutlich hervorgeht.

Figur 7 zeigt eine mögliche Ausgestaltung des Schrittes S18 von Figur 3.

Gemäß Figur 7 selektiert das Videoempfangsgerät eine erste Gruppe von Programmen. Der Schritt S31 entspricht vom Ansatz her dem Schritt S21 von Figur 5.

In einem Schritt S32 prüft das Videoempfangsgerät 1, ob der Sendername des empfangenen Fernsehsenders ein der selektierten Gruppe von Programmen zugeordnetes Sortierkriterium erfüllt. Der Schritt S32 entspricht im Wesentlichen dem Schritt S22 von Figur 5.

Wenn das Sortierkriterium erfüllt ist, fügt das Videoempfangsgerät 1 den empfangenen Fernsehsender in einem Schritt S33 der selektierten Gruppe von Programmen hinzu. Anderenfalls geht das Videoempfangsgerät 1 direkt zu einem Schritt S34 über, in dem das Videoempfangsgerät 1 prüft, ob es bereits alle Gruppen von Programmen selektiert hat. Wenn dies nicht der Fall ist, geht das Videoempfangsgerät 1 zu einem Schritt S35 über, in dem es die nächste Gruppe von Programmen selektiert. Von dort aus geht das Videoempfangsgerät 1 zum Schritt S32 zurück. Anderenfalls ist die Vorgehensweise von Figur 7 beendet.

Figur 8 zeigt - rein beispielhaft - einige mögliche Sortierkriterien für die einzelnen Gruppen von Programmen, und zwar ein Sortierkriterium pro Zeile.

Das letzte Sortierkriterium von Figur 8 ist ein Einfachkriterium. Denn es weist zwar mehrere Teilbedingungen auf, jede Teilbedingung ist jedoch eindeutig und wird nur durch einen einzigen Sendernamen erfüllt. Auf Grund des Umstands, dass das letzte Sortierkriterium von Figur 8 sowohl die Teilbedingung "RTL" als auch die Teilbedingung "RTL II" als auch die Teilbedingung "Super RTL" enthält, wäre es jedoch möglich, diese drei Teilbedingungen durch eine einheitliche Teilbedingung "*RTL???" zu ersetzen. In diesem Fall wäre das letzte Sortierkriterium ein Mehrfachkriterium.

Die anderen vier Sortierkriterien sind Mehrfachkriterien. Bezüglich des ersten, des zweiten und - in analoger Anwendung - des dritten Sortierkriteriums von Figur 8 wird zur Vermeidung von Wiederholungen auf die entsprechenden Ausführungen zu den Sortierkriterien von Figur 6 verwiesen. Das vierte Sortierkriterium ist ebenfalls ein Mehrfachkriterium. Denn die erste Teilbedingung des vierten Sortierkriteriums von Figur 8 wird durch alle Sendernamen erfüllt, die aus zwei oder drei Zeichen bestehen, wobei das letzte Zeichen der Buchstabe "R" sein muss. Im Ergebnis wird das vierte Sortierkriterium von allen sogenannten "dritten Programmen" des deutschen Fernsehsystems erfüllt, nämlich vom
- Westdeutschen Rundfunk (WDR),
- Südwest Rundfunk (SWR),
- Mitteldeutschen Rundfunk (MDR),
- Norddeutschen Rundfunk (NDR),
- Hessische Rundfunk (HR),
- Bayerischen Rundfunk (BR) und
- Radio Berlin Brandenburg (RBB).

Das vierte (und auch das fünfte) Sortierkriterium von Figur 8 kann insbesondere bei einer zweistufigen Ausgestaltung in Verbindung mit dem zweiten und dritten Sortierkriterium von Figur 8 (sowie korrespondierenden Sortierkriterien für den Westdeutschen Rundfunk usw.) vorteilig sein. Dies wird später in Verbindung mit Figur 9 näher erläutert werden.

Die empfangbaren Fernsehsender umfassen in vielen Fällen Gruppen von Fernsehsendern, die den größten Teil des Tages dieselben Programmbeiträge ausstrahlen (beispielsweise dieselbe Nachrichtensendung oder denselben Spielfilm oder dasselbe Sportereignis) und nur ab und zu - beispielsweise nur am Wochenende und/oder nur an ein bis zwei Stunden des Tages - voneinander abweichende Programminhalte aufweisen. Für den Anwender 4 ist oftmals nur einer dieser Fernsehsender von Bedeutung. Ein typisches Beispiel derartiger Programme sind die oben genannten dritten Programme des Deutschen Fernsehsystems.

In einem derartigen Fall kann es sinnvoll sein, die entsprechenden Fernsehsender im Rahmen des Sendersuchlaufs entsprechend dem zweiten und dritten Sortierkriterium von Figur 8 (und korrespondierender Sortierkriterien für die anderen dritten Programme) jeweils zu einer Gruppe von Programmen zusammenzufassen und im Nachgang zum Sendersuchlauf so vorzugehen, wie dies nachfolgend in Verbindung mit Figur 9 näher erläutert wird. Die nachstehend in Verbindung mit Figur 9 erläuterte Vorgehensweise entspricht also dem Schritt S3 von Figur 2.

Gemäß Figur 9 prüft das Videoempfangsgerät 1 in einem Schritt S41, ob es eine Bearbeitung der Gruppen von Programmen beenden soll. Wenn dies nicht der Fall ist, geht das Videoempfangsgerät 1 zu Schritten S42 bis S45 über. Anderenfalls ist die Vorgehensweise von Figur 9 beendet. Es ist jedoch möglich, einen Schritt S46 vorzusehen, der vor dem endgültigen Beenden der Vorgehensweise von Figur 9 ausgeführt wird.

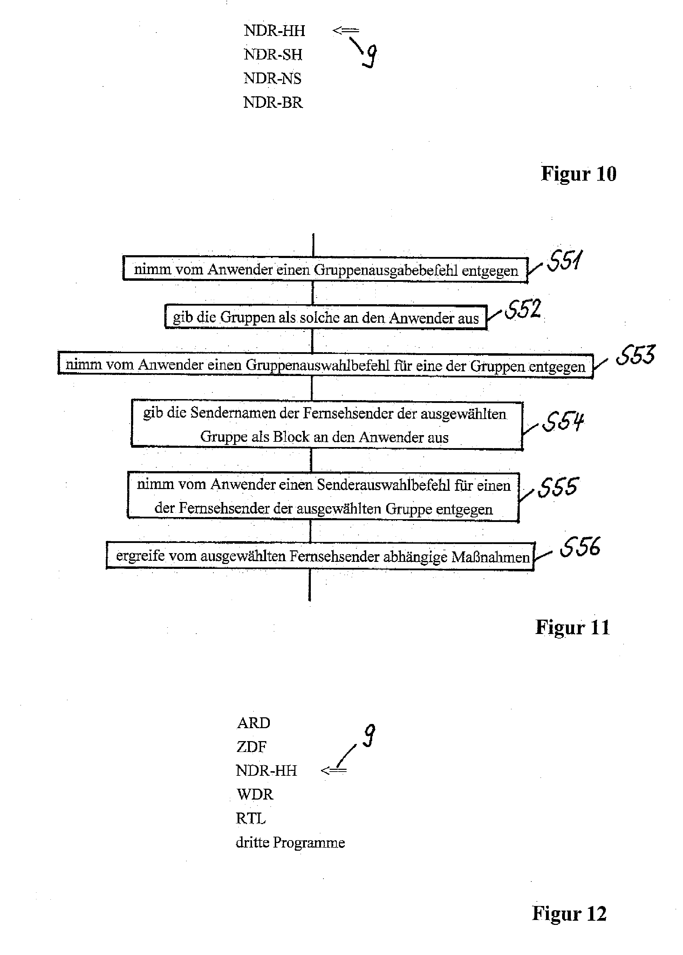

Im Schritt S42 wird eine Gruppe von Programmen ausgewählt. Es ist möglich, dass das Videoempfangsgerät 1 die Auswahl der Gruppe von Programmen selbsttätig vornimmt. Alternativ kann die Auswahl durch den Anwender 4 erfolgen, der dem Videoempfangsgerät 1 einen entsprechenden Gruppenauswahlbefehl vorgibt. Bei einer automatischen Selektion durch das Videoempfangsgerät 1 kann beispielsweise das Videoempfangsgerät 1 eine Liste der Gruppen von Programmen verwalten und nacheinander je eine Gruppe selektieren. Bei einer Vorgabe eines Gruppenauswahlbefehls gibt der Anwender 4 den entsprechenden Befehl vor. Im Schritt S43 gibt das Videoempfangsgerät 1 die Sendernamen der Fernsehsender der ausgewählten Gruppe als Block an den Anwender 4 aus. Figur 10 zeigt eine mögliche Ausgabe sowie zusätzlich einen Cursor 9.

Im Schritt S44 nimmt das Videoempfangsgerät 1 vom Anwender 4 einen Senderauswahlbefehl für einen der Fernsehsender der angezeigten Gruppe entgegen. Beispielsweise kann der Anwender 4 den Cursor 9 positionieren und sodann einen Bestätigungsbefehl eingeben.

Im Schritt S45 ordnet das Videoempfangsgerät 1 den vom Anwender 4 im Schritt S44 ausgewählten Fernsehsender einem bevorzugten Programmplatz zu, der der Gruppe zugeordnet ist. Beispielsweise kann bei der Gruppe der "NDR-Fernsehsender" ein Speichern auf einem Programmplatz erfolgen, dem das Sortierkriterium "NDR*" - siehe Figur 6 - zugeordnet ist.

Vom Schritt S45 aus wird zum Schritt S41 zurückgegangen. Im Falle der automatischen Selektierung der Gruppen prüft das Videoempfangsgerät 1, ob es bereits für alle Gruppen von Programmen die Schritte S42 bis S45 abgearbeitet hat. Im Falle einer manuellen Selektierung der Gruppen ist die im Schritt S41 ergriffene Reaktion von einer entsprechenden Eingabe des Anwenders 4 abhängig.

Wie bereits erwähnt, ist es bei der Vorgehensweise von Figur 9 möglich, aber nicht zwingend erforderlich, zusätzlich den Schritt S46 vorzusehen. Falls der Schritt S46 vorhanden ist, wird im Schritt S46 eine neue Gruppe gebildet, wobei zur Bildung der neuen Gruppe zumindest teilweise die den obenstehend erwähnten bevorzugten Programmplätzen zugeordneten Fernsehsender herangezogen werden. Dies wird nachstehend in Verbindung mit dem zweiten, dritten und vierten Sortierkriterium von Figur 8 näher erläutert.

Es wird nachfolgend angenommen, dass im Rahmen der wiederholten Abarbeitung der Schritte S42 bis S45 für die "NDR*"-Gruppe, die "BR*"-Gruppe und die anderen dritten Programme (WDR, SWR, HR, MDR und RBB) jeweils ein Fernsehsender dem entsprechenden bevorzugten Programmplatz zugeordnet wurde. Es wurde also auf Grund einer entsprechenden Eingabe des Anwenders 4 einer der "NDR"-Sender als "der NDR-Sender" ausgewählt. Analoges gilt für die anderen dritten Programme. Im Schritt S46 wird anhand der "bevorzugten dritten Programme" eine Gruppe der dritten Programme gebildet. Dies ist auf einfache Weise mit dem vierten Sortierkriterium von Figur 8 möglich, da die gesuchten Programme alle zwei oder drei Buchstaben aufweisen, wobei der jeweils letzte Buchstabe stets ein "R" ist. Eine Ausnahme gilt nur für den Fernsehsender "RBB", der jedoch durch die zweite Teilbedingung des vierten Sortierkriteriums von Figur 8 berücksichtigt wird.

Analoge Vorgehensweisen, wie obenstehend für die dritten Programme erläutert, sind selbstverständlich auch bei anderen bevorzugten Programmen möglich, siehe beispielsweise das fünfte Sortierkriterium von Figur 8.

Im Normalbetrieb, also bei Abarbeitung des Schrittes S4 von Figur 2, kann unter anderem eine Anwahl eines Programmplatzes nebst nachfolgenden, auf diesen Programmplatz bezogenen Aktionen so erfolgen, wie dies nachfolgend in Verbindung mit Figur 11 näher erläutert wird.

Im Normalbetrieb ist in aller Regel einer der Fernsehsender durch den Anwender 4 bereits selektiert. Von diesem Zustand wird in Figur 11 ausgegangen. In diesem Betriebszustand des Videoempfangsgeräts 1 ist es möglich, dass das Videoempfangsgerät 1 in einem Schritt S51 vom Anwender 4 einen Gruppenausgabebefehl entgegennimmt. In Reaktion auf den Gruppenausgabebefehl gibt das Videoempfangsgerät 1 in einem Schritt S52 die Gruppen als solche an den Anwender 4 aus. Figur 12 zeigt eine mögliche Darstellung. Gemäß Figur 12 kann die Darstellung insbesondere in der Form erfolgen, dass das Videoempfangsgerät 1 jeweils den Sendernamen eines vorbestimmten Fernsehsenders (siehe die dritte Zeile in Figur 12, "NDR-HH") oder eine von den Fernsehsendern der jeweiligen Gruppe zu erfüllende Minimalbedingung (siehe beispielsweise Zeile 2 in Figur 12: "ZDF" für alle mit "ZDF" beginnenden Sendernamen) an den Anwender 4 ausgibt. In manchen Fällen ist jedoch weder die eine noch die andere Ausgabe sinnvoll. In diesem Fall kann eine andere Ausgabe erfolgen, siehe beispielsweise die sechste Zeile von Figur 12, welche "dritte Programme" lautet.

Es ist weiterhin möglich, dass zusätzlich zu den Gruppen als solchen die Sendernamen einzelner Fernsehsender mit angezeigt werden, beispielsweise "ARD", siehe Zeile 1 von Figur 12. Es ist also möglich, dass der Gruppenausgabebefehl mit einem Programmausgabebefehl identisch ist, der die Anzeige der verfügbaren Programme bewirkt.

In einem Schritt S53 nimmt das Videoempfangsgerät 1 vom Anwender 4 einen Gruppenauswahlbefehl für eine der Gruppen entgegen. Beispielsweise kann der Anwender 4 den Cursor 9 entsprechend positionieren. In Reaktion auf die Positionierung des Cursors 9 - sei es sofort, sei es nach Abwarten einer Verzögerungszeit von einigen, wenigen Sekunden, sei es erst nach Eingabe eines Bestätigungsbefehls durch den Anwender 4 - führt das Videoempfangsgerät 1 einen Schritt S54 aus. Im Schritt S54 gibt das Videoempfangsgerät 1 die Sendernamen der Fernsehsender der ausgewählten Gruppe als Block an den Anwender 4 aus. Beispielsweise - eine entsprechende Eingabe durch den Anwender 4 vorausgesetzt - die Darstellung von Figur 12 ausgeblendet und stattdessen die von Figur 10 wiedergegeben werden. Alternativ kann beispielsweise auch die Darstellung von Figur 10 neben der Darstellung von Figur 12 zusätzlich mit angezeigt werden (Ausklappen des Zusatzmenüs).

Die Vorgehensweise kann gegebenenfalls auch mehrstufig erfolgen. Wenn beispielsweise der Anwender 4 zunächst die dritten Programme auswählt, kann eine Auflistung der dritten Programme als solche erfolgen, also ohne Aufspaltung in deren Regionalversionen. Wenn der Anwender 4 sodann eines der dritten Programme - beispielsweise den bayerischen Rundfunk "BR" - auswählt, erfolgt eine Anzeige der Fernsehsender des bayerischen Rundfunks, im gegebenen Beispiel "BR-Süd", "BR-Nord" und "BR-Alpha".

In einem Schritt S55 nimmt das Videoempfangsgerät vom Anwender 4 einen Senderauswahlbefehl für einen der Fernsehsender der ausgewählten Gruppe entgegen. Beispielsweise kann entsprechend der Darstellung von Figur 10 der Fernsehsender "NDR-HH" ausgewählt werden. Alternativ könnte beispielsweise - entsprechende Eingaben des Anwenders 4 vorausgesetzt - über die Kette Gruppenausgabebefehl - ein- oder mehrfache Vorgabe des Gruppenauswahlbefehls und Vorgabe des Senderauswahlbefehls der Fernsehsender "BR-Alpha" ausgewählt werden.

In einem Schritt S56 wird sodann entsprechend reagiert. Der Begriff "entsprechend reagieren" bedeutet, dass im Schritt S56 Maßnahmen ergriffen werden, die vom ausgewählten Fernsehsender abhängig sind. Beispielsweise kann das Videoempfangsgerät 1 direkt auf den ausgewählten Fernsehsender 4 abgestimmt werden oder können Programminformationsdaten (EPG) bezüglich dieses Fernsehsenders an den Anwender 4 ausgegeben werden oder kann eine Programmierung zur Aufzeichnung einer bestimmten Fernsehsendung erfolgen, die über diesen Fernsehsender empfangen wird.

Die Auswahl eines Fernsehsenders über den Weg "Anzeige der Gruppen - Auswahl einer Gruppe - Anzeige der Fernsehsender der ausgewählten Gruppe - Auswahl eines Fernsehsenders der ausgewählten Gruppe" ist ein möglicher Weg, über eine Gruppe von Fernsehsendern auszuwählen. Es existiert jedoch ein weiterer Weg, der in manchen Fällen schneller und eleganter sein kann. Dieser Weg wird nachfolgend in Verbindung mit Figur 13 näher erläutert.

Ausgangspunkt der Vorgehensweise von Figur 13 ist, dass bereits ein Fernsehsender selektiert ist. Aus diesem Grund ist in Figur 13 ein Schritt S61 dargestellt, in dem die Selektion eines Fernsehsenders erfolgt. Der Schritt S61 als solcher ist aber nicht Bestandteil der Vorgehensweise von Figur 13, sondern der Vorgehensweise nur vorgeschaltet.

Gemäß Figur 13 nimmt das Videoempfangsgerät 1 in einem Schritt S62 vom Anwender 4 einen Gruppenanwahlbefehl entgegen. Der Gruppenanwahlbefehl ist unabhängig vom selektierten Fernsehsender und unabhängig von der Gruppe, welcher der selektierte Fernsehsender zugeordnet ist. Es handelt sich also um einen Befehl derart "finde die zugehörige Gruppe". In Reaktion auf die Vorgabe des Gruppenanwahlbefehls ermittelt das Videoempfangsgerät 1 (sofern möglich) in einem Schritt S63 eine Gruppe, welcher der momentan selektierte Fernsehsender zugeordnet ist. Falls der momentan selektierte Fernsehsender keiner Gruppe zugeordnet ist, kann eine entsprechende Fehlermeldung an den Anwender 4 ausgegeben werden.

In einem Schritt S64 gibt das Videoempfangsgerät 1 die Sendernamen der Fernsehsender der ermittelten Gruppe als Block an den Anwender 4 aus. In einem Schritt S65 nimmt das Videoempfangsgerät 1 vom Anwender 4 einen Senderauswahlbefehl für einen der Fernsehsender der angezeigten Gruppe entgegen. In einem Schritt S66 reagiert das Videoempfangsgerät 1 entsprechend.

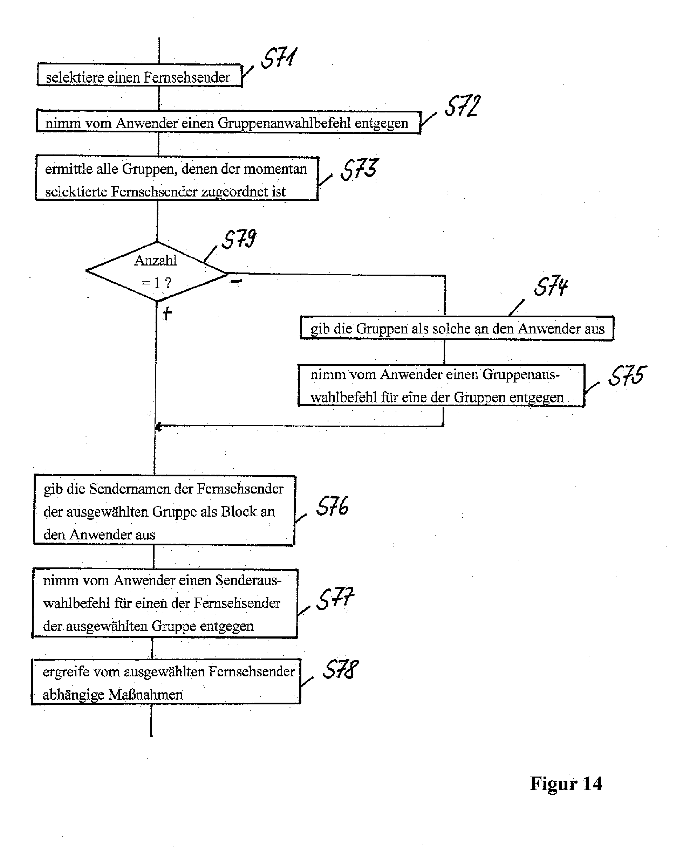

Die Schritte S64 bis S66 korrespondieren inhaltlich mit den Schritten S54 bis S56 von Figur 11. Es wird daher auf die entsprechenden Erläuterungen von Figur 11 verwiesen. Die Vorgehensweise von Figur 13 kann entsprechend Figur 14 modifiziert werden. Figur 14 verwendet Schritte S71 bis S78. Es ist weiterhin möglich, aber nicht zwingend erforderlich, zusätzlich einen Schritt S79 vorzusehen.

Die Schritte S71 und S72 von Figur 14 korrespondieren inhaltlich mit den Schritten S61 und S62 von Figur 13. Die Schritte S74 bis S78 korrespondieren inhaltlich mit den Schritten S52 bis S56 von Figur 11. Bezüglich der Schritte S71, S72 und S74 bis S78 wird daher auf die entsprechenden Ausführungen zu den Figuren 11 und 13 verwiesen.

Der Schritt S73 stellt eine Modifikation des Schrittes S63 von Figur 13 dar. Im Schritt S73 ermittelt das Videoempfangsgerät 1 in Reaktion auf den Gruppenanwahlbefehl alle Gruppen, denen der momentan selektierte Fernsehsender zugeordnet ist. Auf diese Gruppen von Programmen ist der Schritt S74 entsprechend beschränkt.

Bei der Vorgehensweise, so wie sie bisher erläutert wurde, werden die Schritte S74 und S75 stets abgearbeitet.

Wenn jedoch die Anzahl an Gruppen von Programmen, die im Schritt S73 aufgefunden wurde, exakt eins ist, können die Schritte S74 und S75 übersprungen werden. Falls daher der optionale Schritt S79 vorhanden ist, kann im Schritt S79 eine entsprechende Prüfung vorgenommen werden und gegebenenfalls direkt zum Schritt S76 übergegangen werden.

Wie bereits erwähnt, korrespondiert der Schritt S74 von Figur 14 im Wesentlichen mit dem Schritt S52 von Figur 11. Auch die Darstellung kann daher entsprechend Figur 12 sein.

Die vorliegende Erfindung kann auf verschiedene Weise abgewandelt werden. Beispielsweise sind folgende Abwandlungen möglich:
- Einzelne Funktionalitäten - beispielsweise die Gruppenbildung und das Abspeichern eines Fernsehsenders einer Gruppe von Programmen auf einem bevorzugten Programmplatz - oder auch die erfindungsgemäße Funktionalität in ihrer Gesamtheit können vom Anwender 4 aktiviert und deaktiviert werden.
- Die Sortierkriterien können fest vorgegeben sein oder vom Anwender 4 manipulierbar sein. Auch ist es möglich, die Sortierkriterien zu aktualisieren. Dies gilt sowohl für die Sortierkriterien, die den einzelnen Programmplätzen zugeordnet sind, als auch für die Sortierkriterien, die den Gruppen von Programmen zugeordnet sind.
- Es ist möglich, die Sortierkriterien - eventuell getrennt für Gruppen und Programmplätze - in größeren Einheiten zusammenzufassen. In diesem Fall kann beispielsweise dem Anwender 4 ermöglicht werden, eine der Einheiten zu selektieren.

Die vorliegende Erfindung weist viele Vorteile auf. Insbesondere ist sie leicht zu implementieren, flexibel, benutzerfreundlich und liefert gute und zuverlässige Ergebnisse.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste:

- 1: Videoempfangsgerät
- 2: Anzeigeeinrichtung
- 3: Ausgabeeinrichtung
- 4: Anwender
- 5: Betriebssoftware
- 6: Maschinencode
- 7: Datenträger
- 8: Satellitenantenne
- 9: Cursor

- M, M': Maße
- S1 bis S79: Schritte

## Patentansprüche

1. Videoempfangsgerät (1), das derart ausgebildet ist, dass es in einem Sendersuchlauf eine Anzahl von Fernsehsendern empfängt, bei jedem empfangenen Fernsehsender, dem ein Sendername zugeordnet ist, den Sendernamen mit Sortierkriterien vergleicht, wobei jedes Sortierkriterium einem von mehreren Programmplätzen und/oder einer Gruppe von Programmen zugeordnet ist, und den empfangenen Fernsehsender in Abhängigkeit des Vergleichsergebnisses dem jeweiligen Programmplatz zuordnet und/oder der jeweiligen Gruppe von Programmen hinzufügt,
**dadurch gekennzeichnet,**
**dass** mindestens eines der Sortierkriterien als Mehrfachkriterium ausgebildet ist, das aus einer Anzahl additiv miteinander verknüpfter Teilbedingungen besteht, von denen mindestens eine als regulärer Ausdruck ausgebildet ist, wobei der reguläre Ausdruck aus einer Teilbedingung und mindestens einem Platzhalter besteht, der stellver-tretend für eine beliebige Anzahl von Zeichen vor und/oder hinter der Teilbedingung steht, so dass sie von mehreren Sendernamen erfüllbar ist, wobei in dem Fall, dass mindestens einem der Programmplätze eines der Mehrfachkriterien zugeordnet ist,
- dem dem betreffenden Programmplatz zugeordneten Fernsehsender ein Maß (M') für den Grad zugeordnet ist, zu dem der zugehörige Sendername die von ihm erfüllte Teilbedingung des dem jeweiligen Programmplatz zugeordneten Mehrfachkriteriums übererfüllt, und
- das Videoempfangsgerät (1) derart ausgebildet ist, dass es
-- vor dem Zuordnen des empfangenen Fernsehsenders zu dem betreffenden Programmplatz ein Maß (M) für den Grad ermittelt, zu dem der Sendername des empfangenen Fernsehsenders die von ihm erfüllte Teilbedingung des dem betreffenden Programmplatz zugeordneten Mehrfachkriteriums übererfüllt, und
-- den empfangenen Fernsehsender nur dann dem betreffenden Programmplatz zuordnet, wenn das für den Sendernamen des empfangenen Fernsehsenders ermittelte Maß (M) für einen geringeren Grad an Übererfüllung charakteristisch ist als das Maß (M'), das dem dem betreffenden Programmplatz momentan zugeordneten Fernsehsender zugeordnet ist.

2. Videoempfangsgerät (1) nach Anspruch 1,
**dadurch gekennzeichnet,**
**dass** das Videoempfangsgerät (1) derart ausgebildet ist, dass es in der Lage ist, im Nachgang zum Sendersuchlauf
- selbsttätig oder in Reaktion auf einen Gruppenauswahlbefehl die Sendernamen der Fernsehsender einer Gruppe als Block an einen Anwender (4) auszugeben,
- vom Anwender (4) einen Senderauswahlbefehl für einen der Fernsehsender der Gruppe entgegen zu nehmen und
- den vom Anwender (4) ausgewählten Fernsehsender einem der Gruppe zugeordneten bevorzugten Programmplatz zuzuordnen.

3. Videoempfangsgerät (1) nach Anspruch 1 oder 2, **dadurch gekennzeichnet,**
**dass** das Videoempfangsgerät (1) derart ausgebildet ist, dass es in der Lage ist, nach der Selektion eines der Fernsehsender durch einen Anwender (4)
- vom Anwender (4) einen für alle Gruppen einheitlichen Gruppenanwahlbefehl entgegen zu nehmen,
- sofern möglich, in Reaktion auf den Gruppenanwahlbefehl mindestens eine Gruppe zu ermitteln, der der momentan selektierte Fernsehsender zugeordnet ist,
- die Sendernamen der Fernsehsender der ermittelten Gruppe als Block an den Anwender (4) auszugeben und
- vom Anwender (4) einen Senderauswahlbefehl für einen der Fernsehsender der Gruppe entgegen zu nehmen.

4. Videoempfangsgerät (1) nach Anspruch 3,
**dadurch gekennzeichnet,**
**dass** das Videoempfangsgerät (1) derart ausgebildet ist, dass es in der Lage ist,
- in Reaktion auf den Gruppenanwahlbefehl alle Gruppen zu ermitteln, denen der momentan selektierte Fernsehsender zugeordnet ist, und die Gruppen als solche an den Anwender (4) auszugeben und
- vor dem Entgegennehmen des Senderauswahlbefehls für einen der Fernsehsender der Gruppe zunächst einen Gruppenauswahlbefehl für eine der Gruppen entgegen zu nehmen und in Reaktion auf den Gruppenauswahlbefehl die Sendernamen der Fernsehsender der ausgewählten Gruppe als Block an den Anwender (4) auszugeben.

5. Videoempfangsgerät (1) nach einem der obigen Ansprüche,
**dadurch gekennzeichnet,**
**dass** das Videoempfangsgerät (1) derart ausgebildet ist, dass es in der Lage ist, nach der Selektion eines der Fernsehsender durch einen Anwender (4)
- für mindestens eine der Gruppen vom Anwender (4) einen Gruppenauswahlbefehl für die jeweilige Gruppe entgegen zu nehmen,
- in Reaktion auf den Gruppenauswahlbefehl die Sendernamen der Fernsehsender der ausgewählten Gruppe als Block an den Anwender (4) auszugeben und
- vom Anwender (4) einen Senderauswahlbefehl für einen der Fernsehsender der Gruppe entgegen zu nehmen.

6. Videoempfangsgerät (1) nach Anspruch 5,
**dadurch gekennzeichnet,**
**dass** das Videoempfangsgerät (1) derart ausgebildet ist, dass es in der Lage ist, nach der Selektion eines der Fernsehsender durch den Anwender (4)
- einen Gruppenausgabebefehl entgegen zu nehmen,
- in Reaktion auf den Gruppenausgabebefehl die Gruppen als solche an den Anwender (4) auszugeben und
- sodann den Gruppenauswahlbefehl für eine der Gruppen entgegen zu nehmen.

7. Videoempfangsgerät (1) nach Anspruch 4 oder 6, **dadurch gekennzeichnet,**
**dass** das Videoempfangsgerät (1) derart ausgebildet ist, dass es im Rahmen der Ausgabe der Gruppen als solche pro Gruppe jeweils den Sendernamen eines vorbestimmten Fernsehsenders der jeweiligen Gruppe oder eine von den Sendernamen der jeweiligen Gruppe zu erfüllende Minimalbedingung an den Anwender (4) ausgibt.

8. Betriebssoftware (5), die Maschinencode (6) umfasst, mit dem ein Videoempfangsgerät (1) programmierbar ist, so dass der Maschinencode (6) von dem Videoempfangsgerät (1) unmittelbar abarbeitbar ist, wobei das Videoempfangsgerät (1) aufgrund der Programmierung mit dem Maschinencode (6) zu einem Videoempfangsgerät (1) nach einem der obigen Ansprüche ausgebildet wird.

9. Betriebssoftware (5) nach Anspruch 8,
**dadurch gekennzeichnet,**
**dass** sie auf einem Datenträger (7) in maschinenlesbarer Form gespeichert ist.

## Claims

1. Video receiver (1), which is so constructed that in a station search it receives a number of television stations, compares - for each received television station with which a station name is associated - the station name with classification criteria, wherein each classification criterion is assigned to one of a plurality of program places and/or a group of programs, and assigns the received television station to the respective program place in dependence on the comparison result and/or adds it to the respective group of programs, **characterised in that** at least one of the classification criteria is constructed as a multiple criterion which consists of a number of additively interlinked sub-conditions, of which at least one is constructed as a regular expression, wherein the regulation expression consists of a sub-condition and at least one wildcard, which acts for any number of characters in front of and/or behind the sub-condition so that it is fulfillable by several station names, wherein if one of the multiple criteria is assigned to at least one of the program places:
- assigned to the television station assigned to the relevant program place is a measure (M') of the extent to which the associated station name over-fulfils the sub-condition, which is fulfilled by it, of the multiple criterion assigned to the respective program place, and
- the video receiver 91) is so constructed that it
- determines, before assignment of the received television station to the relevant program place, a measure (M) of the extent to which the station name of the received television station over-fulfils the sub-condition, which is fulfilled by it, of the multiple criterion assigned to the relevant program place, and
- assigns the received television station to the relevant program place only when the measure (M), which was determined for the station name of the received television station, is characteristic of a lesser extent of over-fulfilling than the measure (M') which is associated with the television station instantaneously associated with the relevant program place.

2. Video receiver (1) according to claim 1, **characterised in that** the video receiver (1) is so constructed that it is in a position subsequently to the station search
- to output automatically or in reaction to a group selection command the station names of the television stations of a group as a block to a user (4),
- to accept from the user (4) a station selection command for a television station of the group and
- to assign to the television station selected by the user (4) a preferred program place assigned to the group.

3. Video receiver (1) according to claim 1 or 2, **characterised in that** the video receiver (1) is so constructed that it is in a position after selection of one of the television stations by a user (4)
- to accept from the user (4) a group selection command standardised for all groups,
- sofar as possible to determine in reaction to the group selection command at least one group associated with the instantaneously selected television station,
- to output the station names of the television stations of the determined group as a block to the user (4) and
- to accept from the user (4) a station selection command for one of the television stations of the group.

4. Video receiver (1) according to claim 3, **characterised in that** the video receiver (1) is so constructed that it is in a position
- to determine in reaction to the group selection command all groups with which the instantaneously selected television station is associated and to output the groups as such to the user (4) and
- prior to acceptance of the station selection command for one of the television stations of the group to initially accept a group selection command for one of the groups and in reaction to the group selection command to output the station names of the television stations of the selected group as a block to the user (4).

5. Video receiver (1) according to any one of the preceding claims, **characterised in that** the video receiver (1) is so constructed that it is in a position after selection of the one of the television stations by a user (4)
- to accept for at least one of the groups a group selection command from the user (4) for the respective group,
- in reaction to the group selection command to output the station names of the television stations of a selected group as a block to the user (4) and
- to accept from the user (4) a station selection command for one of the television stations of the group.

6. Video receiver (1) according to claim 5, **characterised in that** the video receiver (1) is so constructed that it is in a position after selection of one of the television stations by the user (4)
- to accept a group output command,
- in reaction to the group output command to output the groups as such to the user (4) and
- to then accept the group selection command for one of the groups.

7. Video receiver (1) according to claim 4 or 6, **characterised in that** the video receiver (1) is so constructed that within the scope of output of the groups as such it outputs to the user (4) per group in each instance the station name of a predetermined television station of the respective group or a minimum condition to be fulfilled by the station names of the respective group.

8. Operating software (5), which comprises machine code (6) by which a video receiver (1) is programmable, so that the machine code (6) can be directly worked down by the video receiver (1), wherein the video receiver (1) by virtue of the programming by the machine code (6) is constructed to be a video receiver (1) according to any one of the preceding claims.

9. Operating software (5) according to claim 8m, **characterised in that** it is stored in machine-readable form on a data carrier (7).

## Revendications

1. Récepteur vidéo (1) conçu pour recevoir une pluralité de chaînes de télévision lors d'une recherche de chaînes, pour comparer, pour chaque chaîne de télévision reçue à laquelle un nom de chaîne est associé, le nom de chaîne à des critères de tri, chaque critère de tri étant affecté à un emplacement parmi plusieurs emplacements de programme et/ou à un groupe de programmes, et pour affecter la chaîne de télévision reçue à l'emplacement de programme correspondant et/ou au groupe de programmes correspondant en fonction du résultat de la comparaison,
caractérisé en ce'
qu'au moins un des critères de tri est prévu comme critère complexe constitué par une pluralité de conditions partielles concaténées par addition, dont au moins une est prévue comme expression régulière, ladite expression régulière étant constituée d'une condition partielle et d'au moins un label de position représentant une pluralité quelconque de caractères devant et/ou derrière la condition partielle, si bien que celle-ci peut être satisfaite par plusieurs noms de chaîne, et, au cas où au moins un des emplacements de programme est affecté à un des critères complexes :
- une mesure (M') est attribuée à la chaîne de télévision affectée à l'emplacement de programme concerné, représentative du niveau de sursaturation par le nom de chaîne associé de la condition partielle satisfaite par lui du critère complexe affecté à l'emplacement de programme correspondant, et
- le récepteur vidéo (1) est conçu de manière
- à déterminer, préalablement à l'affectation de la chaîne de télévision reçue à l'emplacement de programme concerné, une mesure (M) représentative du niveau de sursaturation par le nom de la chaîne de télévision reçue de la condition partielle satisfaite par lui du critère complexe affecté à l'emplacement de programme concerné, et
-- à n'affecter la chaîne de télévision reçue à l'emplacement de programme concerné que si la mesure (M) déterminée pour le nom de la chaîne de télévision reçue est caractéristique d'un niveau de sursaturation moindre que la mesure (M') associée à la chaîne de télévision momentanément à l'emplacement de programme concerné.

2. Récepteur vidéo (1) selon la revendication 1,
**caractérisé en ce que**
ledit récepteur vidéo (1) est conçu pour, ultérieurement à la recherche de chaînes, être apte à
- transmettre les noms de chaîne d'un groupe sous forme de bloc à un utilisateur (4), automatiquement ou en réponse à une instruction de sélection de groupe,
- recevoir de l'utilisateur (4) une instruction de sélection de chaîne pour une des chaînes de télévision du groupe, et
- à affecter la chaîne de télévision sélectionnée par l'utilisateur (4) à un emplacement de programme préférentiel attribué au groupe.

3. Récepteur vidéo (1) selon la revendication 1 ou 2,
**caractérisé en ce que**
ledit récepteur vidéo (1) est conçu pour, ultérieurement à la sélection d'une des chaînes de télévision par un utilisateur (4), être apte à
- recevoir de l'utilisateur (4) une instruction de définition de groupe unitaire pour tous les groupes,
- déterminer autant que possible, en réponse à l'instruction de définition de groupe, au moins un groupe auquel est affectée la chaîne de télévision momentanément sélectionnée,
- transmettre sous forme de bloc à l'utilisateur (4) les noms des chaînes de télévision du groupe déterminé, et
- à recevoir de l'utilisateur (4) une instruction de sélection de chaîne pour une des chaînes de télévision du groupe.

4. Récepteur vidéo (1) selon la revendication 3,
**caractérisé en ce que**
ledit récepteur vidéo (1) est conçu pour être apte à
- déterminer, en réponse à l'instruction de définition de groupe, tous les groupes auxquels la chaîne de télévision momentanément sélectionnée est affectée, et à transmettre comme tels les groupes à l'utilisateur (4), et à
- recevoir d'abord, préalablement à la réception de l'instruction de sélection de chaînes pour une des chaînes de télévision du groupe, une instruction de sélection de groupe pour un des groupes, et, en réponse à l'instruction de sélection de groupe, transmettre en tant que bloc à l'utilisateur (4) le nom des chaînes de télévision du groupe sélectionné.

5. Récepteur vidéo (1) selon l'une des revendications précédentes, **caractérisé en ce que**
ledit récepteur vidéo (1) est conçu pour, ultérieurement à la sélection d'une des chaînes de télévision par un utilisateur (4), être apte à
- recevoir de l'utilisateur (4), pour au moins un des groupes, une instruction de sélection de groupe pour le groupe correspondant,
- en réponse à l'instruction de sélection de groupe, transmettre sous forme de bloc à l'utilisateur (4) le nom de la chaîne de télévision du groupe sélectionné, et à
- recevoir de l'utilisateur (4) une instruction de sélection de chaîne pour une des chaînes de télévision du groupe.

6. Récepteur vidéo (1) selon la revendication 5,
**caractérisé en ce que**
ledit récepteur vidéo (1) est conçu pour, ultérieurement à la sélection d'une des chaînes de télévision par l'utilisateur (4), être apte à
- recevoir une instruction de transmission de groupe,
- en réponse à l'instruction de transmission de groupe, transmettre comme tels les groupes à l'utilisateur (4), et à
- recevoir ensuite l'instruction de sélection de groupe pour un des groupes.

7. Récepteur vidéo (1) selon la revendication 4 ou 6,
**caractérisé en ce que**
ledit récepteur vidéo (1) est conçu pour transmettre à l'utilisateur (4), lors de la transmission des groupes comme tels, par groupe le nom de chaîne d'une chaîne de télévision prédéfinie du groupe ou une condition minimale à satisfaire par les noms de chaîne du groupe.

8. Logiciel d'exploitation (5), comprenant un code machine (6), au moyen duquel un récepteur vidéo (1) est programmable, de manière à permettre l'exécution directe du code machine (6) par le récepteur vidéo (1), ledit récepteur vidéo (1) étant conçu comme un récepteur vidéo (1) selon l'une des revendications précédentes sur la base de la programmation par le code machine (6).

9. Logiciel d'exploitation (5) selon la revendication 8,
**caractérisé en ce que**
celui-ci est stocké sur un support de données (7) sous une forme lisible par une machine.
